# EUROPEAN PATENT APPLICATION

(11) **EP 3 145 201 A1**
(43) Date of publication of application: **22.03.2017**
(21) Application number: 15306451.4
(22) Date of filing: 17.09.2015
(51) Int. Cl.: H04N 21/2343, H04N 21/24, H04N 19/10

(54) **VIDEO PROCESSING WITH DYNAMIC RESOLUTION CHANGES**

(71) Applicant: Harmonic Inc., San Jose, CA 95134 (US)
(72) Inventor: PERRON, Claude, 35830 BETTON (FR); GENDRON, Patrick, 35410 CHATEAUGIRON (FR)
(74) Representative: Nguyen Van Yen, Christian

(57) **Abstract**

A video encoding system and method down-filters an incoming video signal to a subresolution before encoding by a standard block based encoding algorithm. The selection of the resolution to which the incoming signal is down filtered is determined on the basis of a prediction of the video quality that may be expected at the system output with regard to the complexity or entropy of the signal. The predicted output video quality may be estimated on the basis of the Quantization Parameter of an encoder receiving the input video signal, or a filtered video signal. The selection of a new down-filtered resolution may be carried out with regard to one or more thresholds.

## Description

### Field of the invention

The present invention relates to the distribution of multimedia content on any delivery network.

### Background of the invention

The consumption of video content over various networks is dramatically increasing. This increase is in part due to VOD (Video On Demand) services but also to increasing number of live services, combined with the multiplication of devices on which video can be accessed. By way of example only, video content can notably be accessed from various kinds of terminals such as smart phones, tablets, PC, TV, Set Top Boxes, game consoles, etc. connected through various types of networks including broadcast, satellite, cellular, ADSL, and fibre.

Video content can be characterized by different parameters and among these, the spatial resolution defines the number of pixels in horizontal and vertical for the picture. While any integer number can be set as a resolution, in practice a number of standard resolutions are defined. Popular resolutions available today include for example 480p (720x480 pixels), 576p (720x576 pixels), 720p (1280x720 pixels), 1080i (1920x1080 pixels split in two interlaced fields of 540 lines), 1080p (1920x1080 pixels), 2160p (3840x2160 pixels) and 4320p (7680x4320 pixels). The resolutions 720p, 1080i and 1080p are generally referred as "HD" (High Definition) or "HDTV" (High Definition Television), the resolution 1080p being more specifically referred as "Full HD" (Full High Definition). Resolutions 2160p and 4320p are generally called "UHD" (Ultra High definition) or "UHDTV" (Ultra High Definition Television), 2160p being more specifically called "4K UHD" (4 kilo Ultra High Definition) and 4320p being more specifically called "8k UHD" (8 kilo Ultra High Definition). Between these resolutions, there are many intermediate resolutions that can be used during transmission to have a "smaller" video content on the delivery network even if the end device rescale the content to a full resolution just before the display

Due to the huge size of raw video, video content is generally accessed in compressed form. The video content is therefore also associated with a video compression standard. The most widely used video standards belong to the "MPEG" (Motion Picture Experts Group) family, which notably comprises the MPEG-2, AVC (Advanced Video Compression also called H.264) and HEVC (High Efficiency Video Compression, also called H.265) standards. Generally speaking, more recent formats are considered to be more advanced, supporting more encoding features and/or providing a better compression ratio. For example, the HEVC format is more recent and more advanced than AVC, which is itself more recent and more advanced than MPEG-2. Therefore, HEVC yields more encoding features and greater compression efficiency than AVC. The same applies for AVC in relation to MPEG-2. These compression standards are block-based compression standards, as are the Google formats VP8, VP9 and VP10.

Even within a same video compression standard, a video content can be encoded with very different options. It can be for example encoded at various bitrates. It can also be encoded using respectively only I-Frames (I-Frame standing for Intra-Frame), I and P-Frames (P standing for Predicted Frame) or I, P and B frames (B standing for Bi-directional frames). More generally, the number of available encoding options increases with the complexity of the video Standard.

Conventional video coding methods use three types of frames: I or Intrapredicted frames, P or Predicted frames, and B or bi-directional frames. I frames can be decoded independently, like a static image. P frames use reference frames that are previously displayed, and B frames use reference frames that are displayed prior to and/or later than the B frame to be encoded. The use of reference frames notably consists of predicting image blocks as a combination of blocks in reference frames, and encoding only the difference between a block in the current frame and the combination of blocks from reference frames.

A GOP is defined as the Group of Pictures between one I-frame and the next one in encoding/decoding order:
Closed GOP refers to any block based encoding scheme wherein the information to decode a GOP is self-contained. This means that a GOP contains one I-frame, P-frames that only reference the I-frame and P frames within the GOP, and B-frames that only reference frames within the GOP. Thus, there is no need to get any reference frame from a previous GOP to decode the current GOP. In common decoder implementations, switching between resolutions at some point in a stream requires that at this point a "closed GOP" encoding scheme is used, since the first GOP after a resolution change must not require any information from the previous GOP in order to be correctly decoded.

By contrast, in the coding scheme called Open GOP, the first B frames in a current GOP which are displayed before the I-frame can reference frames from previous GOPs. Open GOP coding scheme are widely used for broadcasting applications because this encoding scheme provides a better video quality for a given bitrate.

Video delivery is continuously increasing on the various networks that support such a media. Among the different networks, IP networks where video consumption is growing significantly and where the video is taking the larger part of the total bit rate demand particular attention.

As video consumption is increasing faster than network bandwidth, there is an ongoing need to find more efficient compression schemes at very low bit rates. The operators carrying video content over their networks are continually seeking a trade off between the following parameters:
- Find the appropriate video codec and change to a more efficient one when the inherent costs are reasonable. One of the inherent costs is the existing customer decoder park that has potentially to be replaced when changing the video codec. Changing the video codec used in a broadcasted service is therefore always a costly decision for an operator. This decision can be taken only when all other improvements using the currently used video codec has been exhausted.
- In any case, for a given video codec, the operator is typically trying to select an operating point (i.e. a video bit rate for a CBR encoding scheme) that will satisfy its customer expectation for video quality while using the lowest possible bitrate.

The well known drawback of a block based compression technique such as a MPEG encoder is that when the output bit rate is reduced too much for a given signal, the video encoder produces block artefacts. These block artefacts appears when the input signal have too high an entropy for the desired output bitrate. So, for a given bitrate, the operator may need to reduce the video entropy before going to the compression stage. One method to reduce the entropy of a video signal is to reduce its spatial resolution using a spatial resolution filter that will remove a part of the signal information.

It is desired to provide a solution offering flexibility in choice of resolution whilst retaining the broadest compatibility with existing systems.

### Summary of the invention

According to a first aspect of the invention, there is provided a video processing system comprising: a video quality estimator adapted to predict output Video quality (VQ) by analysis of a version of an input video signal; a resolution selector adapted to determine a desired resolution level of said video signal for encoding based on a comparison of the output of said video quality estimator for the available transmission channel bandwidth and a predefined quality threshold, wherein a new resolution level is selected if the predicted video quality passes the threshold; a resolution filter adapted to reduce the resolution of said video signal and output the video signal for encoding in accordance with a block based video encoding algorithm, said resolution filter outputting said signal at the resolution specified by said resolution selector.

This approach offers higher bit rate efficiency compared to multi layer codecs known in the state of the art, and is furthermore compatible with existing single-layer consumer decoders, reducing deployment costs dramatically.

According to a development of the first aspect, the video quality estimator may predict the video quality for a given transmission channel bandwidth by analysis of a full resolution input video signal.

This approach offers the advantage of structural simplicity, and more easily supports the direct identification of the optimal resolution for encoding without recourse to trial and error.

According to a further development of the first aspect, the video quality estimator may predict video quality for a given transmission channel bandwidth by analysis of a resized video signal output by said spatial resolution filter.

This approach can reduce processing requirements, and, as a result, also reduce power consumption and processing delays, since only a reduced image is processed for video quality estimation.

According to a further development of the first aspect, the spatial resolution filter may output a plurality of resized video signals at different resolutions, and said video quality estimator may predict the Video quality after encoding by analyzing of each of the resized video signals output by said spatial resolution filter.

This approach offers the possibility of directly selecting the best performing resolution, without the need for trial and error, and without reliance on assumptions concerning the effects of changing resolution.

According to a further development of the first aspect, each of said predefined plurality of resolutions may be a standard video display resolution.

By using standard resolutions, the compatibility of the encoded signal with standard decoders is ensured, thereby containing the costs of implementing the invention.

According to a further development of the first aspect, the video quality estimator may be adapted to predict video quality on the basis of an analysis of the complexity of said version of said input video signal.

Complexity is a convenient basis for predicting video quality, of which certain conventional encoders produce suitable indicators by default. This simplifies the development process for systems implementing this development of the invention.

According to a further development of the first aspect, the video quality estimator may be adapted to predict video quality on the basis of an analysis of the quantization parameter to be applied to said version of said input video signal in order to reach a specified output bit rate.

For a given output bitrate, the Quantization Parameter (QP) is an indicator of the video complexity which certain conventional encoders produce by default. This simplifies the development process for systems implementing this development of the invention. The QP also gives an indication of the Video Quality (VQ) defined here as the video "blockiness" (ie level of visible block artifacts).

According to a further development of the first aspect, the system may further comprise a video encoder adapted to encode the output of the resolution filter according to a block based encoding algorithm and a GOP manager adapted to cause the video encoder to encode the output of the resolution filter in accordance with an open GOP encoding scheme during periods in which the output of said resolution selector is static, and revert to a closed GOP encoding scheme for the first group of pictures after a change in output of said resolution selector resulting in a new signal resolution.

This approach means that the system can benefit from the advantages of Open GOP encoding in terms of band width and video quality, without compromising the underlying approach of the invention.

According to a further development of the first aspect, the system may further comprise a video encoder adapted to encode the output of the resolution filter according to a block based encoding algorithm and according to a closed GOP encoding scheme, and the video encoder may further comprise a GOP manager adapted trigger the start of a new GOP, and to trigger said resolution filter to change to a different output resolution to coincide with the start of the new GOP.

Thus, the system of the invention can maintain compatibility with existing closed GOP systems.

According to a further development of the first aspect, the video quality estimator may constitute the first stage of a two pass encoder structure, and the output of the video quality estimator to the resolution selector may be the quantization parameter of the incoming video signal, wherein the resolution selector may be adapted to select a higher resolution for a signal with a lower entropy, and a lower resolution for a higher entropy respectively.

Using an existing unit for predicting video quality reduces the costs of developing and deploying a system according to the invention.

According to a second aspect there is provided a resolution selector adapted to determine a desired resolution level of an input video signal for encoding based on a comparison of a predicted video quality for said video signal at the available transmission channel bandwidth with a predefined quality threshold, wherein a new resolution level is selected if the predicted video quality passes the threshold, said resolution selector being further adapted to output an instruction for a resolution filter to reduce the resolution of said video signal to said desired resolution.

This approach offers higher bit rate efficiency compared to multi layer codecs known in the state of the art, and is furthermore compatible with existing single-layer consumer decoders, reducing deployment costs dramatically.

According to a third aspect, there is provided a method of processing a video signal comprising the steps of predicting an output video quality on the basis of an analysis of a version of an incoming video signal, comparing the predicted output video quality with a defined video quality threshold, selecting an optimal resolution with reference to said threshold, filtering said incoming video signal to said optimal resolution,

The Optimal resolution may be the highest possible resolution that ensures video quality above a threshold. This approach offers higher bit rate efficiency compared to multi layer codecs known in the state of the art, and is furthermore compatible with existing single-layer consumer decoders, reducing deployment costs dramatically.

According to a further development of the third aspect there is provided a further step of encoding the filtered video signal in accordance with a block based video encoding algorithm.

According to a further development of the third aspect, the version of the incoming video signal is the incoming video signal itself.

This approach offers the advantage of structural simplicity, and more easily supports the direct identification of the optimal resolution for encoding without recourse to trial and error.

According to a further development of the third aspect, the version of an incoming video signal is the filtered video signal.

This approach can reduce processing requirements, and as a result power consumption and processing delays, since only a reduced image need be processed for video quality estimation.

According to a further development of the third aspect the step of filtering comprises filtering said incoming video signal to a plurality of resolutions, said step of predicting the video quality of a version of an incoming video signal comprises predicting the video quality of each of said filtered signals, said step of comparing the predicted video quality with defined video quality thresholds comprises comparing each of the plurality of determined video qualities with defined video quality thresholds, and said step of encoding said filtered video signal in accordance with a block based video encoding algorithm comprises encoding the filtered video signal selected from said plurality as representing an optimal resolution with reference to said thresholds.

This approach offers the possibility of directly selecting the best performing resolution, without the need for trial and error, and without reliance on assumptions concerning the effects of changing resolution.

According to a fourth aspect, there is provided a computer program adapted to implement the steps of the second aspect and its developments.

According to a fifth aspect, there is provided a computer readable medium incorporating the computer program according to the third aspect.

### Brief Description of the Drawings

The above and other advantages of the present invention will now be described with reference to the accompanying drawings, in which:

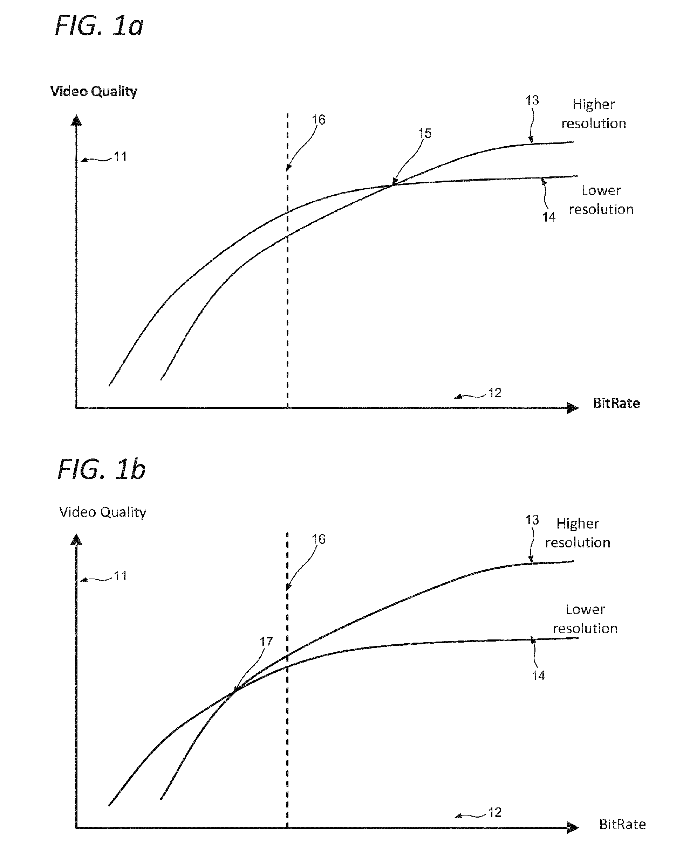

Figure 1 a shows for time T1 in a given content how video quality may evolve versus bitrate for a given picture format.
Figure 1 b shows for time T2 in a given content how video quality may evolve versus bitrate for a given picture format.
Figure 2 shows a video processing system in accordance with a first embodiment;
Figure 3 shows an approach to resolution selection corresponding to the system of figure 2;
Figure 4 shows a video processing system in accordance with a second embodiment;
Figure 5 shows an approach to resolution selection corresponding to the system of figure 4;
Figure 6 shows a video processing system in accordance with a third embodiment;
Figure 7 shows an approach to resolution selection corresponding to the system of figure 6;
Figure 8 shows the structure of a generic encoder adaptable to embodiments of the invention;
Figure 9a shows a method of processing a video signal corresponding to the approach of figures 2,3, 4 and 5;
Figure 9b shows a method of encoding a video signal corresponding to the approach of figures 6 and 7; and
Figure 10 shows a generic computing system suitable for implementation of embodiments of the invention.

### Detailed description

Conventional MPEG encoder systems are configured to encode incoming video signals having known parameters. This means that bit range in which the encoder can operate without generating block artifacts is limited. However, for a given bit rate, if a wide range of possible signal entropies are considered, this fixed encoder setting may be challenged by an alternative approach using a scalable scheme, where at a given bitrate, for the highest complex sequence the enhancement layers may be skipped to give more bitrate to the base layer running at a lower resolution.

A scalable compression scheme can operate on a wider range of bit rate because it natively works with multiple resolution formats. Even if the compression efficiency of the scalable compression scheme is lower than a single layer compression scheme, at very low bit rates the behavior is better.

Figure 1 a shows for time T1 in a given content how video quality may evolve versus bitrate for a given picture format. Figure 1 b shows for time T2 in a given content how video quality may evolve versus bitrate for a given picture format. As shown in figures 1 a and 1 b, video quality is plotted on a y axis 11 against Bit rate on an x axis 12. For each figure, two curves 13 and 14 have been plotted, representing characteristics of the same content at different signal resolutions. Specifically, curve 13 represents a higher resolution signal, while curve 14 represents a lower resolution signal by way of example. These curves are of course content dependant (evolving over time) as illustrated by fig 1 a representing curves for a content type at a point of time T1 and figure 1 b representing curves for the same content at a point in time T2. It has been appreciated that for any such pair of curves, the higher resolution will not always give the best video quality (fewer block artifacts), since below a certain bit rate, the higher level of compression required will lead to compression artifacts degrading picture quality in a manner which is more noticeable and objectionable than the comparatively graceful decline in quality inherent in reduction of resolution. As shown in figure 1 a there is a point 15 at which the two cross over for a given bit rate, where at higher bit rates it is better to select the higher resolution 13, and at lower bit rates it is better to select the lower resolution. If we consider the targeted bitrate represented by the vertical line 16 for example, we can see in figure 1 a that the lower resolution curve 14 offers better video quality than the high resolution curve 13.

As shown in figure 1 b meanwhile there is a point 17 at which the two cross over for a given bit rate, where at higher bit rates it is better to select the higher resolution 13, and at lower bit rates it is better to select the lower resolution. If we consider the targeted bitrate represented by the vertical line 16 for example, we can see, in fig 1 b that the higher resolution curve 13 offers better video quality than the lower resolution curve 14.

Thus it will be understood that in the two cases of figures 1 a and 1 b, a different choice of spatial resolution may be optimal given the same channel constraints, depending on the nature of the video content itself. In this particular case, we may imagine that in figure 1 a the video content is high entropy content, where even a relatively high bit rate may still be insufficient to support a high resolution signal without substantial compression, and that that in figure 1 b the video content is low entropy content, where even a relatively low bit rate may be sufficient to support a high resolution signal without substantial compression.

As the signal changes, or the targeted bitrate evolves as a consequence of bandwidth availability or user configuration, it may become desirable to switch back or forth between the available resolutions. It will be appreciated that while two resolutions are shown in figures 1 a and 1 b, any number of resolutions may be provided for as desired.

Video quality here is defined as the fidelity of the resulting video after encoding and decoding compared to the input video used as a reference and more precisely it is associated with the video blockiness (ie level of visible block artifacts). While in everyday usage video quality may be considered to have objective and subjective aspects, in the context of the present invention the objectives components are of primary interest, and more particularly the objective components or indicators of video quality that can be ascertained automatically. Peak Signal to noise ratio and Structural Similarity are two known tools for measuring fidelity. Related considerations are complexity or entropy, since a high entropy signal is inherently less compressible, and, to meet bandwidth constraints, will have to be compressed or down filtered more than an equivalent low entropy signal, reducing quality. Accordingly, video quality can be predicted by comparing different input and output signals, or through consideration of the characteristics of the incoming signal together with knowledge of the behavior of the compression algorithm. Further, a person of ordinary skill in the art would recognize that other methods or techniques used to predict video quality can be implemented and still comply with the invention described herein. In the following description, where the terms Video quality, complexity, entropy, or Quantization Parameter are used, is shall be born in mind that in view of the relationships between them, any approach described with reference to any one of these terms could equally be approached on the basis of any other of these terms, with the modifications implied by the relationship between the terms in question.

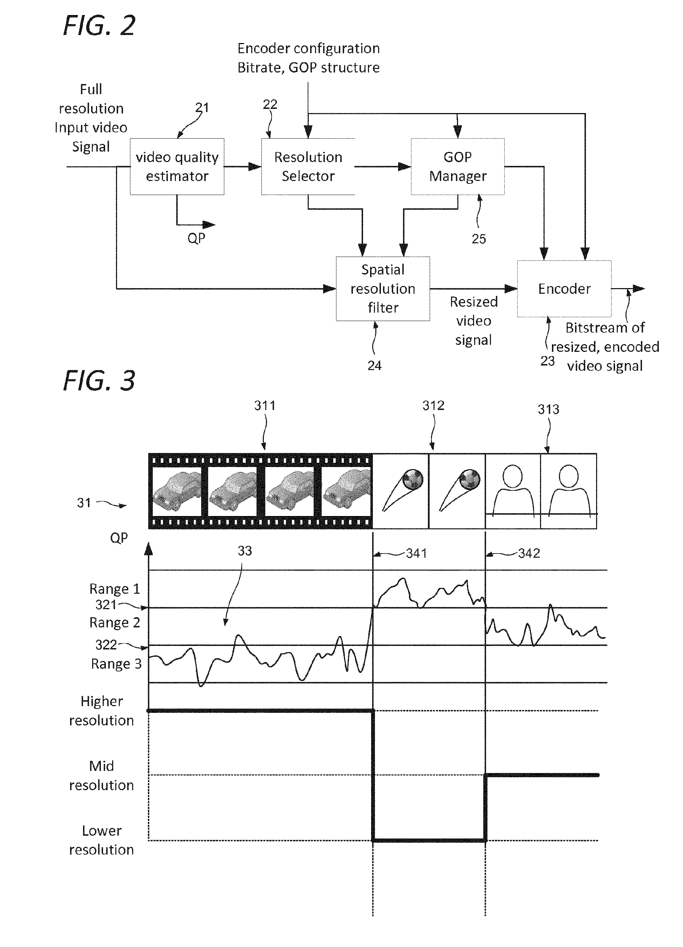

Figure 2 shows a video processing system in accordance with a first embodiment.

As shown in figure 2, there is provided a video quality estimator 21 adapted to predict the video quality of a video signal output by an encoder on the basis of an incoming video signal; a resolution selector 22 adapted to determine a desired resolution level of the video signal based on a comparison of the output of the video quality estimator 21 and the available transmission channel bandwidth and predefined quality threshold. This selection is made on the basis that a new resolution level is selected if the predicted video quality passes the threshold. There is further provided a spatial (or pixel) resolution filter 24 adapted to reduce the resolution of the incoming video signal to the resolution specified by the resolution selector 22. In some variants of the embodiment there may be provided a video encoder 23 adapted to encode the output of said resolution filter 24 in accordance with a block based video compression algorithm. In some variants of the embodiment the system may comprise a GOP manager 25 as described hereafter.

In operation, the resolution selector 22 determines a desired resolution level of the video signal based on a comparison of the output of said video quality estimator 21 at the available transmission channel bandwidth and predefined quality thresholds dynamically, that is to say, in an iterative or repeated manner, so as to continually present to the encoder 23 a video signal at the optimal resolution. More particularly, there is provided a resolution selector adapted to determine a desired resolution level of an input video signal for encoding based on a comparison of a predicted video quality for said video signal at the available transmission channel bandwidth with a predefined quality threshold, wherein a new resolution level is selected if the predicted video quality passes the threshold, said resolution selector being further adapted to output an instruction for a resolution filter to reduce the resolution of the video signal to said desired resolution.

The video quality estimator 21 may provide a measurement of the video signal complexity or entropy. This may be calculated for every image, for images occurring at a regular interval, for images corresponding to I, P or B frames, for images corresponding to the start or end of a GOP, for images corresponding to a change from open GOP to closed GOP encoding, etc. or any combination of these.

The Group of Picture (GOP) concept is inherited from MPEG and refers to an I-picture, followed by all the P and B pictures until the next I picture. Typical MPEG GOP structures might be IBBPBBPBBI. Although H.264, or other block-based compression standards does not strictly require more than one I picture per video sequence, the recommended rate control approach does suggest a repeating GOP structure to be effective.

The resolution selector 22 is adapted to select a higher resolution for a signal with a lower entropy, and a lower resolution for a higher entropy respectively.

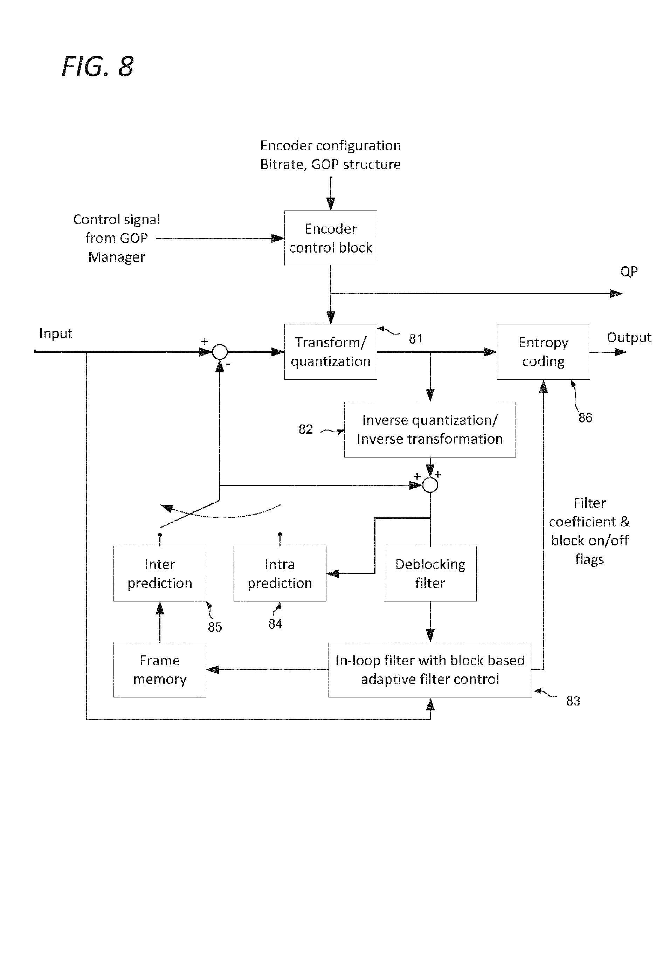

In certain embodiments, the video quality estimator constitutes the first stage of a two pass encoder structure as explained hereafter with reference to figure 8, and the video encoder 25 constitutes the second stage of this two pass encoder structure, and the output of the video quality estimator 21 to the resolution selector 22 is the quantization parameter of each image of said incoming video signal. Where the quantization parameter is used as a measurement of the estimated video quality, the resolution selector 22 is adapted to select a higher resolution for a signal with a lower Quantization parameter (QP), and a lower resolution for a higher QP respectively.

The average of the QP on a given image is a strong indication of the image complexity when an encoder works in a constant bit rate mode. The QP factor used for the first pass encoding will be high if the entropy is high and vice versa. And the higher the QP, the higher are the macroblock artefacts. An objective of the encoder is to generate video with a level of macroblock artefacts below a threshold, this means that the encoder has to reduce the signal entropy using decimation filters to reduce the spatial resolution.

In a typical block based video encoding algorithm residuals, i.e. the difference between the source and prediction signals are transformed into the spatial frequency domain by an integer transform such as Discrete Cosine Transform (DCT) function. The Quantization Parameter determines the step size for associating the transformed coefficients with a finite set of steps. Large values of QP represent big steps that crudely approximate the spatial transform, so that most of the signal can be represented by only a few coefficients. Small values of QP give a more accurate approximation or the block's spatial frequency spectrum, but at the cost of more bits. In a usual implementation, CBR encoder Rate controllers will compute the QP needed to achieve the target bit rate at the GOP level.

The Spatial Resolution Selector 22 block makes the decision on the spatial resolution to be used considering the current input signal entropy (information provided by the video quality estimator) and the target bitrate configured by the user.

It selects the new resolution among a set of predefined sub-resolutions of the input Full resolution.

The block provides the spatial resolution filter with the next resolution to be applied once the current GOP is complete, and also provides this information to the GOP manager 23, in order for the GOP manager to be aware of a call for a new resolution.

Figure 3 shows an approach to resolution selection corresponding to the system of figure 2. As shown in figure 3, an incoming video stream 31 comprises in sequence three types of video content 311, 312, and 313. The first 311 is cinematographic content which is pre-processed for optimal encoding, the second 312 is a sporting emission which includes rapid action, changes of camera and viewing angle, and as such has a high entropy, and the third 313 is a news report which comprises a single individual head and shoulders facing camera, and as such has a low entropy. In accordance with the approach of figure 3, the entropy estimator determines the instantaneous complexity of the full resolution input video signal, and passes this to the resolution selector 22. The Resolution selector determines complexity thresholds (e.g. QP Threshold if the QP of a first pass encoding is used to estimate this video complexity. For the following explanations, QP will be taken as an example of a measurement of the video complexity) on the basis of the available bandwidth, and compares the complexity (QP) values from the entropy estimator with these thresholds. As shown, there are two thresholds, although in a working system there may be any number of thresholds as required. Each threshold corresponds to the watershed between two adjacent resolution standards. As shown, there are three resolutions standards, which for the sake of this example, are taken to correspond to 4k, 1080p and 720p resolution standards. The curve 33 represents the variation in QP value over time. It can be seen that while the QP value largely remains below the thresholds 322 for the duration of the cinematographic content 311, at the cut-off 341 when the content type shifts from the cinematographic content 311 to the a sporting emission 312 the QP jumps above the threshold 321. This jump in QP reflects the fact that the higher entropy of the incoming video means that it can only be brought below the required bandwidth with strong compression. On this basis, as the signal slips over the threshold 321 the resolution selector 22 instructs the spatial resolution filter 24 to reduce the video signal size to the lowest resolution. This remains the case until the next cut-off 342 when the content type shifts from the sporting emission content 312 to the news report 313, when the QP drops below the threshold 321. This drop in QP reflects the fact that the lower entropy of the incoming video means that it can be brought below the required bandwidth with lower compression. On this basis, as the QP (video complexity) slips below the threshold 321 the resolution selector 22 instructs the spatial resolution filter 24 to reduce the video signal size to the medium resolution.

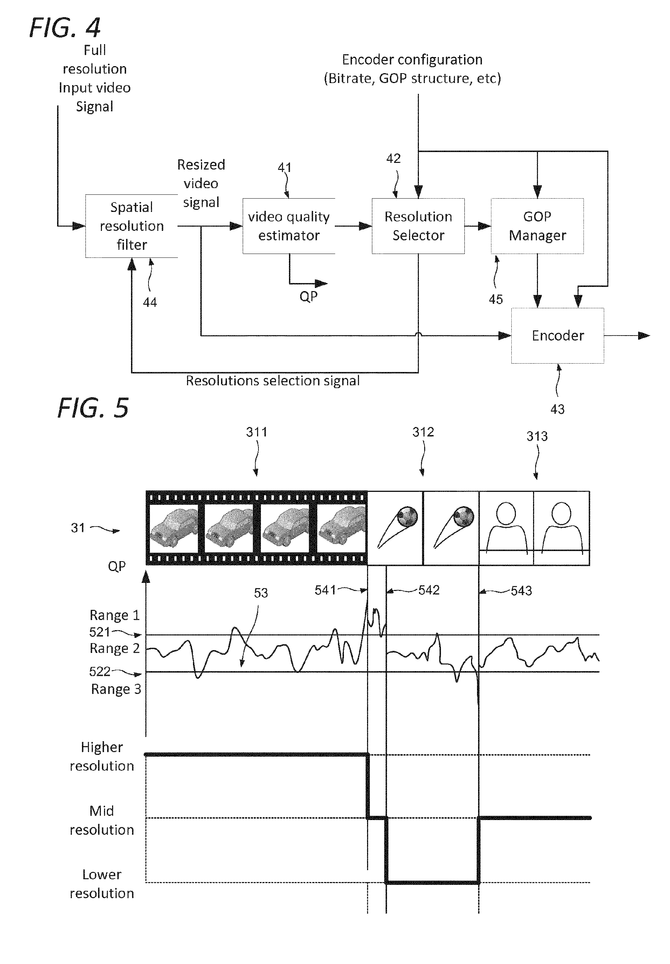

Figure 4 shows a video processing system in accordance with a second embodiment.

As shown in figure 4, there is provided a video quality estimator 41 adapted to predict the video quality of a video signal output by an encoder on the basis of an incoming video signal; a resolution selector 42 adapted to determine a desired resolution level of a video signal based on a comparison of the output of the video quality estimator 41 at the available transmission channel bandwidth and a predefined quality threshold. This selection is made on the basis that a new resolution level is selected if the predicted video quality passes the threshold. There is further provided a spatial resolution filter 44 adapted to reduce the resolution to the resolution specified by the resolution selector 42. In some variants of the embodiment the system may comprisea video encoder 43 adapted to encode the output of the resolution filter 44 in accordance with a block based video encoding algorithm. In some variants of the embodiment the system may comprise a GOP manager 45 as described hereafter.

As shown in figure 4, the spatial resolution filter receives the full resolution input video signal as an input, and also the output of the resolution selector. The spatial resolution filter outputs the resized video signal to the encoder 43 and the video quality estimator 41, which in turn passes the estimated Video quality after encoding of the resized video to the resolution selector 42. The resolution selector 42 also receives the encoder configuration, bit rate and GOP structure information, and outputs the selected resolution information to the spatial resolution filter 44, the GOP manager 45 and in certain embodiments the encoder 43. The encoder 43 receives GOP information and/or instructions from the GOP Manager as well as general encoder configuration, and using these information encodes the resized video signal.

Comparing the system of figure 4 with that of figure 2 it is apparent that the incoming full resolution video signal passes through the spatial resolution filter before reaching the video quality estimator 41. Each of the components 41, 42, 43, 44, 45 provides substantially the same functions as described with respect to figure 2, except that by subjecting the incoming full resolution video signal to the spatial resolution filter 44 it becomes possible for the resolution selector to instruct the spatial resolution filter 44 to try different levels of filtering, and observe the result on the estimated video quality after encoding of the signal. This approach may in some cases be preferable to that of figure 2 since while the system of figure 2 is based on an assumption that entropy will scale linearly with spatial resolution, whilst the approach of figure 4 enables a direct observation of the effects of changing resolution.

Figure 5 shows an approach to resolution selection corresponding to the system of figure 4. As shown in figure 5, the incoming video stream 31 is identical to that of figure 3.

In accordance with the approach of figure 5, the spatial resolution filter 44 filters the full resolution input video signal. When the system is initiated, the spatial resolution filter may start at a default filtering level, which may correspond to directly passing through the original signal without reduction in spatial resolution. The video quality estimator 41 determines the complexity of the video signal output by the spatial resolution filer 44, and passes this to the resolution selector 42. The resolution selector 42 determines QP thresholds 521 and 522 on the basis of the available bandwidth, and compares the QP value from the quality estimator with these thresholds. As shown, there are three resolutions standards, which for the sake of this example, are taken to correspond to 4k, 1080p and 720p resolution standards. The curve 53 represents the variation in QP value over time. It can be seen that while the QP value largely remains below the thresholds 521, for the duration of the cinematographic content 311, at the cut-off 541 when the content type shifts from the cinematographic content 311 to the a sporting emission 312 the QP jumps above the threshold 521. This jump in QP reflects the fact that the higher entropy of the incoming video means that it can only be brought to the target bandwidth with strong compression. On this basis, as the signal slips over the threshold 521 the resolution selector 42 instructs the spatial resolution filter 44 to reduce the video signal size to the next resolution down. As shown, the QP signal at the intermediate resolution, although lower, remains above the threshold 521, so the resolution selector 42 instructs the spatial resolution filter 44 to reduce the video signal size to the lowest resolution down at cut-off 542, which brings the QP to the desired level. This remains the case until the next cut-off 543 when the content type shifts from the sporting emission content 312 to the news report 313, when the QP drops below the lower threshold 522. This drop in QP reflects the fact that the lower entropy of the incoming video means that it can be brought to the target bandwidth with lower compression. On this basis, as the signal slips below the threshold 522 the resolution selector 42 instructs the spatial resolution filter 44 to reduce the video signal size to the medium resolution (while it was set to deliver the low resolution), and the QP returns to the desired range.

According to an alternative approach, the system may initialise at a highest resolution, and if it is determined that predicted video quality falls below a threshold, the resolution may be taken to the next resolution down. This process can be repeated until a resolution is reached at which predicted video quality remains consistently above the threshold. In this approach the system may revert to the highest resolution periodically, for example at system start up, whenever a new GOP is initiated, when content type changes, and regular predefined intervals.

According to a further alternative approach, the system may initialise at a lowest resolution, and if it is determined that predicted video quality is above a threshold (meaning a QP below a threshold), the resolution may be taken to the next resolution up. This process can be repeated until a resolution is reached at which predicted video quality remains consistently above the threshold. In this approach, the system may revert to the lowest resolution periodically, for example at system start up, whenever a new GOP is initiated, when content type changes, and regular predefined intervals.

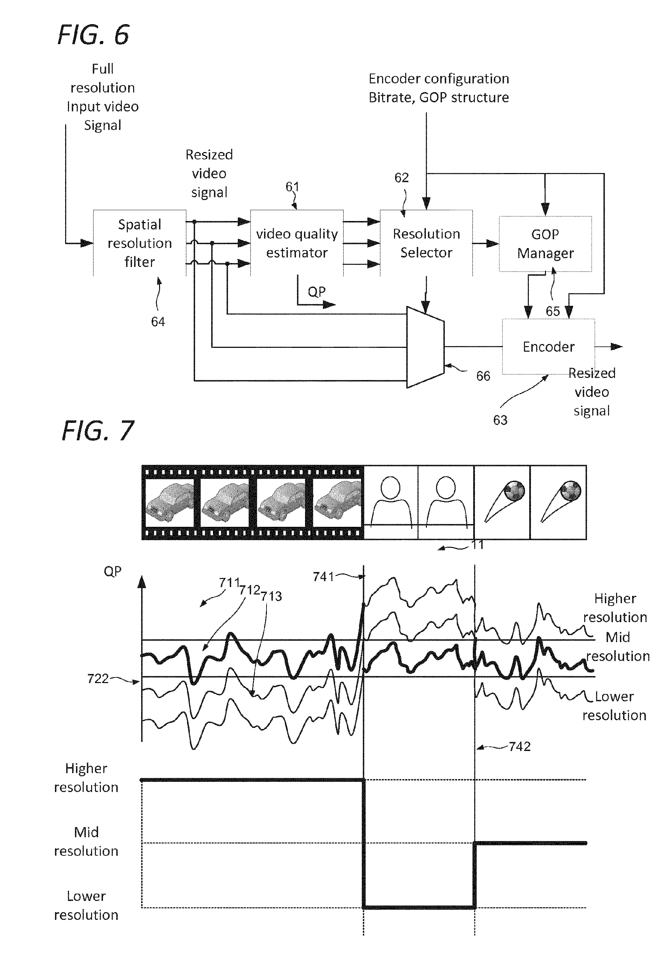

Figure 6 shows a video processing system in accordance with a third embodiment.

As shown in figure 6, there is provided a video quality estimator 61 adapted to predict the video quality of a video signal output by an encoder on the basis of an incoming video signal; a resolution selector 62 adapted to determine a desired resolution level of a video signal based on a comparison of the output of the video quality estimator 61 and the available transmission channel bandwidth and predefined quality thresholds. This selection is made on the basis that a new resolution level is selected if the predicted video quality passes the threshold. There is further provided a spatial resolution filter 64 adapted to reduce at any time the resolution to the different resolutions specified by the resolution selector 62. In some variants of the embodiment the system may comprise a video encoder 63 adapted to encode the output of the selected (66) resized video provided by the resolution filter 64 in accordance with a block based video encoding algorithm. In some variants of the embodiment the system may comprise a GOP manager 65 as described hereafter.

As shown in figure 6, the spatial resolution filter receives the full resolution input video signal as an input. The spatial resolution filter outputs resized video signals at a number of different resolutions to a selector 66 controlled by the resolution selector 62. The output of the selector provides the resized video signal to the encoder 63 and the video quality estimator 61, which in turn passes the estimated video quality value for each of these resized video signals to the resolution selector 62. The resolution selector 62 also receives the encoder configuration, bit rate and GOP structure information, and outputs the selected resolution information to the spatial resolution selector 64 and to the GOP manager 65. The encoder 63 receives GOP information and/or instructions from the GOP Manager 65 as well as general encoder configuration, and using this information together with the signal from the selector 66 encodes the resized video signal chosen by the resolution selector 62.

Comparing the system of figure 6 with that of figure 4 it is apparent that whilst in the approach of figure 4 it may be necessary to try several different resolutions before the best resolution is identified, in the approach of figure 6 it is possible to more rapidly select the best resolution. This comes at the expense of running a number of resizing algorithms and entropy estimations in parallel.

Figure 7 shows an approach to resolution selection corresponding to the system of figure 6. As shown in figure 7, the incoming video stream 31 is identical to that of figure 3.

In accordance with the approach of figure 7, the spatial resolution filter 64 filters the full resolution input video signal to produce a number of reduced resolution signals. The video quality estimator 61 determines the predicted video quality of each of the reduced resolution video signals output by the spatial resolution filer 64, and passes these to the resolution selector 62. The resolution selector 62 determines QP threshold 721 on the basis of the available bandwidth, and compares the QP values 711, 712, 713 from the entropy estimator with this threshold. As shown, there are three resolutions standards and correspondingly three QP values, which for the sake of this example are taken to correspond to 4k, 1080p and 720p resolution standards. The curves 711, 712 and 713 represent the variation in QP value over time for the high, medium and low resolution video signals respectively. In this approach, the role of the resolution selector is to observe the QP values corresponding to the available resolutions, and to select whichever fits best between the defined threshold. It can be seen that for the duration of the cinematographic content 311, the high resolution QP signal lies below the thresholds 721 at the cut-off 741 when the content type shifts from the cinematographic content 311 to the a sporting emission 312 the high resolution QP jumps above the threshold 721. This jump in QP reflects the fact that the higher entropy of the incoming video means that it can only be brought below the required bandwidth with strong compression. The line corresponding to the lower resolution 713 is now the best match for the threshold as it is the only one below the QP threshold 721, so that the resolution selector 62 instructs the spatial resolution filter 64 to reduce the video signal size to the low resolution. This remains the case until the next cut-off 742 when the content type shifts from the sporting emission content 312 to the news report 313, when the QP of the medium resolution signal 712 drops below the threshold 722. This drop in QP reflects the fact that the lower entropy of the incoming video means that it can be brought below the required bandwidth with lower compression. On this basis, as the signal slips over the threshold 722 the resolution selector 42 selects the medium resolution, on the basis that this now offers the best match to the threshold.

In a preferred aspect of the three embodiments described with respect to figure 2, 4 and 6, the Spatial Resolution Filter block 24, 44, 64 applies the resolution filtering to the input video signal according to the configuration provided by the Resolution Selector block and upon the trigger provided by the GOP management block.

The Spatial Resolution Filter block 24, 44, 64 implements one or more downscaling algorithms as will readily occur to the skilled person, such as bi-linear bi-cubic, Gaussian and Lanczos. The Spatial Resolution Filter block has the additional feature that the Spatial Resolution Filter block receives input from the resolution selector block, specifying which of the available output resolutions is required.

For a better video quality at a given bit rate, an Open GOP encoding scheme may be used in many situations, in which case the encoder shall properly manage the moment in time when the resolution change occurs.
- The video resolution change must occur on an Intra picture.
- The Intra picture when the change of resolution occurs must be the first image ( in encoding order) of a closed GOP. This means that any other images contained in this GOP or any future GOP must not reference any previous image ( encoding in the previous resolution)
- After this first GOP, the encoder will move back to an open GOP encoding scheme for a better video quality

In the preceding embodiments, the possible resolutions that the resolution selector may specify are limited to three standard resolutions. It will be understood that any number of resolutions may be specified, and that some or all of these resolutions may be non standard resolutions. According to some embodiments, the possible resolutions may evolve over time, such that the set of available resolutions is updated to better correspond to network conditions, video content types and other relevant factors.

While the preceding embodiments refer to a reduction of the resolution of the incoming video signal to the resolution specified by the resolution selector, it will be understood that in some cases the native resolution of the incoming video signal might be specified, for example if the incoming video signal is of low resolution, if very high bit rate is available, or if the video signal is of very low entropy. In this case, we can consider that the video resolution is reduced by zero.

In accordance with a further development of any preceding embodiment, the Encoder 23, 43, 63 operates in a closed GOP mode, and the GOP management block 25, 45, 65 is adapted to issue an instruction to the Encoder to begin a new Group of Pictures to coincide with a change in resolution demanded by the resolution selector 22, 42, 62.

In accordance with a further development of any preceding embodiment, the Encoder 23, 43, 63 operates in a closed GOP and the GOP management block 25, 45, 65 controls the Group Of Pictures structure under processing in the encoder, and enables the spatial resolution filter 24, 44, 64 to implement a change in resolution requested by the resolution selector 22, 42, 62 to coincide with the initiation of a new Group of pictures.

In accordance with a further development of any preceding embodiment, the Encoder operates in an open GOP mode, and the GOP management block 25, 45, 65 is adapted to issue an instruction to the Encoder to temporarily switch to a closed GOP mode, to begin a new closed Group of Pictures to coincide with a change in resolution demanded by the resolution selector 22, 42, 62, and then revert to an open GOP mode of encoding.

In accordance with a further development of any preceding embodiment, the Encoder operates in an open GOP mode and the GOP management block 25, 45, 65 controls the Group Of Pictures structure under processing in the encoder, and enables the spatial resolution filter 24, 44, 64 to implement a change in resolution requested by the resolution selector 22, 42, 62 to coincide with the initiation of a new closed Group of pictures.

In accordance with a further development of any preceding embodiment, the Block based Encoder 23, 43, 63 implements a bock-based encoding algorithm. The algorithm is preferably a standard block based algorithm such as MPEG-2, MPEG4-AVC, HEVC or VPx encoder, etc. as shown in fig 8.

The stream produced by this block is preferably a fully compliant stream, which means that any standard decoder can decode it without any additional artefacts, even when resolution change occurs.

It will be appreciated that certain features of the present invention may be partially available in existing encoder products, for example the first pass encoding used in entropy estimation, or features supporting the functions described for the GOP Manager 23.

Figure 8 shows the structure of a generic block based video encoder adaptable to embodiments of the invention.

This generic Motion-compensated hybrid encoder described in figure 8 is a fully normative and slave encoder controlled by higher level algorithms implemented in the GOP manager bloc 65.

The Generic Motion-compensated hybrid encoder is composed of several processing stages:
- Transform (and Inverse Transform) 81
- Quantization (and Inverse Quantization) 82
- Loop Filter 83
- Intra prediction 84
- inter prediction 85
- Entropy Coding 86

Video is composed of a stream of individual pictures that can be broken down into individual blocks of x pixels by x lines called "macroblocks". It is at the macroblock level that the following processing takes place:

### Transform/Quantization and its inverse processes:

Residuals, i.e. the difference between the source and prediction signals coming from Intra or Inter prediction blocks are transformed into the spatial frequency domain by transform like or closed to Discrete Cosine Transform (DCT). Depending on the standard in question this transform can be an integer or a floating point transform. Then at the Quantization stage, a Quantization Parameter (QP) determines the step size for associating the transformed coefficients with a finite set of steps. Large values of QP represent big steps that crudely approximate the spatial transform, so that most of the signal can be represented by only a few coefficients. Small values of QP gives a more accurate approximation the block's spatial frequency spectrum, but at the cost of more bits. In usual implementation, CBR encoder Rate controllers will compute the QP needed to achieve the target bit rate at the GOP level.

### Deblocking Filter

Some standard defines a de-blocking filter that operates on both 16x16 macroblocks and 4x4 block boundaries. In the case of macroblocks, the filter is intended to remove artifacts that may result from adjacent macroblocks having different estimation types (e.g. motion vs. intra estimation), and/or a different quantizer scale. In the case of blocks, the filter is intended to remove artefacts that may be caused by transform/quantization and from motion vector differences between adjacent blocks. The loop filter typically modifies the two pixels on either side of the macroblock/block boundary using a content adaptive non-linear filter.

### Intra and inter prediction

Intra and Motion estimation (prediction) are used to identify and eliminate the spatial and temporal redundancies that exist inside and between individual pictures. Intra estimation attempts to predict the current block by extrapolating the neighboring pixels from adjacent blocks in a defined set of different directions. Inter prediction attempts to predict the current block using motion vectors to previous and/or future pictures

### Entropy Coding

Before entropy coding can take place, the 4x4 quantized coefficients must be serialized. Depending on whether these coefficients were originally motion estimated or intra estimated, a different scan pattern is selected to create the serialized stream. The scan pattern orders the coefficients from low frequency to high frequency. Then, since higher frequency quantized coefficients tend to be zero, run-length encoding is used to group trailing zeros, resulting in more efficient entropy coding.

The entropy coding stage maps symbols representing motion vectors, quantized coefficients, and macroblock headers into actual bits. Entropy coding improves coding efficiency by assigning a smaller number of bits to frequently used symbols and a greater number of bits to less frequently used symbols.

As described, such an encoder may fulfil the functions ascribed with regard to the embodiments of figure 2, 4 and 6 to the blocks 23, 43 and 63. Furthermore, in view of the capacity of such an encoder to generate the QP value, which as described above may be used as an indication of the likely video quality at the output of the system given the available bandwidth, such an encoder may also fulfil the functions ascribed with regard to the embodiments of figure 2, 4 and 6 to the blocks 21, 41 and 61.

In certain embodiments, the resolution selector block also provide a signal to the GOP management block in order to warn it that the resolution must be changed and consequently that the next GOP shall be a closed GOP.

In accordance with embodiments of the present invention, the resolution changes of the signal to be encoded is modified to adopt a picture format (spatial resolution) selected such that block based compression does not generate block artefacts. Such an encoder can support a wider range of signal entropy at the input for a given bit rate.

In certain embodiments, the resolution selector 22, 42, 62 will need to apply different thresholds depending on a number of system parameters, including the resolution of the input video signal, the characteristics of the outgoing transmission channel and in particular the available bandwidth, the configuration of the encoder and the GOP structure in effect. These and other parameters may all affect the proper choice of video quality threshold. Accordingly, the resolution selector may be adapted to store or access a repository containing definitions of the proper threshold for in each scenario.

This technique applies to any block based compression scheme: MPEG standards such as MPEG-2, MPEG-4/AVC, HEVC, and other formats that MPEG may produce in the future, but also specific formats such as VPx or AVS.

The approach is particularly advantageous for Constant Bit Rate (CBR) encoders such as IPTV encoders since for a given bit rate setting, such encoders have to adapt to any source entropy (from sports material known as high entropy signals to film).

VBR encoders have the capability to work around this problem by increasing the bit rate proportionally to signal entropy. Nevertheless, the described approach remains equally applicable to VBR encoders, for example in the case of a linear TV channel, where the program aggregator is putting back to back different content. With 4k in mind, the traditional broadcasters are challenged by on demand video service providers for example that can deliver 4k content because the delivery chain is there, film content is there and the investment to put in place the 4k file workflow for content preparation in advance is inexpensive. The traditional broadcasters could envisage a similar approach on the basis of a dedicated 4k channel. However, it is far more costly in terms of production infrastructure to adopt a full 4k live workflow.

One way to work around it is to use a 4k encoder that works with a 4K format for film (file based work flow) and switches to HD formats for live content (typically sports or news). The advantage is they can broadcast 4k content like on demand suppliers, but they can aggregate it in a live channel which such on demand suppliers cannot offer. For this particular use case, the switching criteria can be of two types:
- Depending on input signal nature (entropy or native spatial resolution): made automatically by the encoder.
- Could also be based on content type via play list information.

For both cases, the behavior of the encoder is a seamless encoding format switching.

It will be appreciated that the forgoing embodiments are merely non-limiting examples. In particular, it will be appreciated that the functions required to implement the invention may be distributed in a variety of ways amongst system components, for example whether entropy estimation is performed entirely or partially by a first pass encoder, or by a separate subsystem, whether the GOP management is performed entirely or partially by the encoder, or by a separate subsystem, etc.

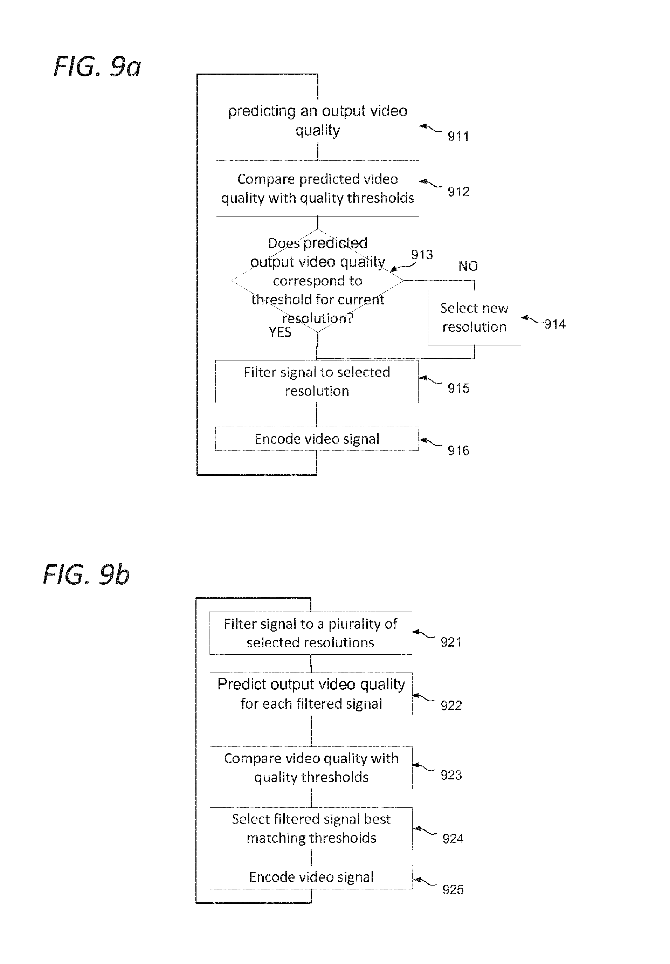

Figure 9a shows a method of encoding a video signal corresponding to the approach of figures 2, 3, 4 and 5. As shown the method starts at step 911 at which an output video quality is predicted on the basis of an analysis of a version of an incoming video signal. At step 912 the predicted output video quality is compared with a defined video quality threshold, and at step 913 it is determined whether predicted output video quality corresponds for the thresholds for the current resolution. If it is determined that the predicted output video quality does not correspond to the threshold for the current resolution the method proceeds to step 914 at which a new resolution is selected, or otherwise proceeds to step 915, at which the signal is filtered to whichever resolution is currently selected.

The step 914 of selecting a new resolution may comprise selecting a resolution with reference to said threshold, or may simply proceed to the next resolution in a predefined sequence as described above. In either case, by iteration of these steps the method will converge on an optimal resolution.

In some variants of the embodiment, the method finally encodes the filtered video signal in accordance with a block based video encoding algorithm at step 916.

It will be appreciated that these steps can be carried out in different orders, and that certain steps may be carried out more frequently than others. In particular, it will be appreciated that while the signal will generally need to be continuously down filtered and encoded, video quality prediction and resolution selection may be carried out from time to time as appropriate, as discussed with regard to the foregoing embodiments.

In certain embodiments, the version of the incoming video signal used in the prediction of output video quality is the incoming video signal itself.

In certain embodiments, the version of the incoming video signal used in the prediction of output video quality is the filtered video signal generated at step 915.

Figure 9b shows a further method of encoding a video signal corresponding to the approach of figures 6 and 7. As shown the method starts at step 921 at which an incoming video signal is filtered to a plurality of resolutions. The method then proceeds to step 922 at which the output video quality is predicted for each of the filtered video signals, and at step 923 the predicted video quality values determined at step 923 are compared with a single quality threshold, before the filtered signal best match the thresholds, or otherwise offering the best performance, is selected at step 924 and according to certain variants of the embodiment, encoded at step 925.

It will be appreciated that these steps can be carried out in different orders, and that certain steps may be carried out more frequently than others. In particular, it will be appreciated that while the signal will generally need to be continuously down filtered and encoded, video quality prediction and resolution selection may be carried out from time to time as appropriate, as discussed with regard to the foregoing embodiments.

According to certain embodiments, there is provided a video encoding system and method which down-filters an incoming video signal to a standard resolution before encoding by a standard block based encoding algorithm. The selection of the resolution to which the incoming signal is down filtered is determined on the basis of a prediction of the video quality that may be expected at the system output with regard to the complexity or entropy of the signal. The predicted output video quality may be estimated on the basis of the Quantization Parameter of an encoder receiving the input video signal, or a filtered video signal. The selection of a new down-filtered resolution may be carried out with regard to one or more thresholds.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

These methods and processes may be implemented by means of computer-application programs or services, an application-programming interface (API), a library, and/or other computer-program product, or any combination of such entities.

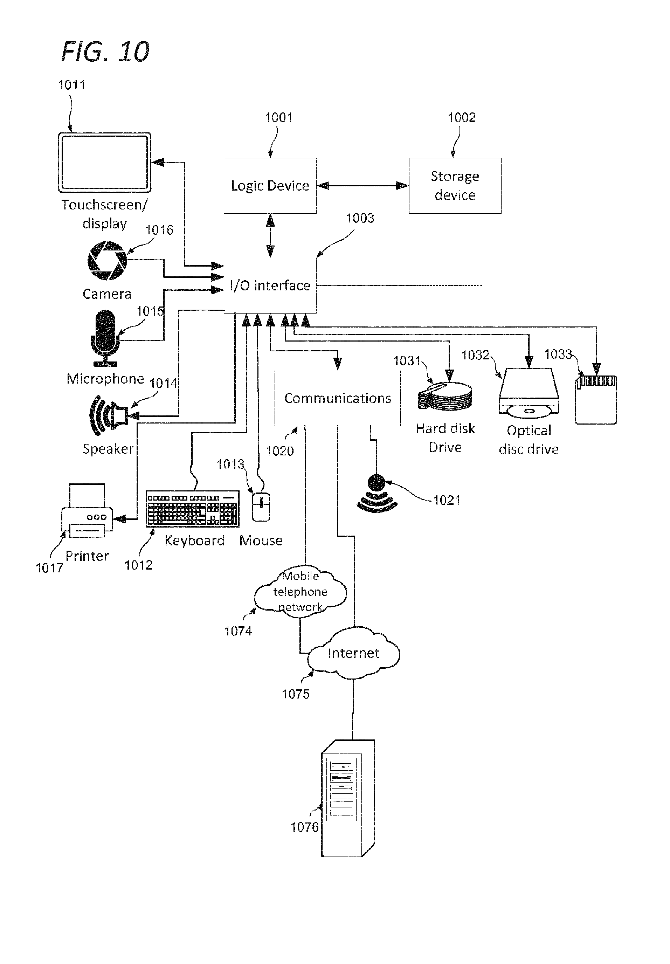

Figure 10 shows a generic computing system suitable for implementation of embodiments of the invention.

A shown in figure 10, a system includes a logic device 1001 and a storage device 1002. The system may optionally include a display subsystem 1011, input subsystem 1012, 1013, 1015, communication subsystem 1020, and/or other components not shown.

Logic device 1001 includes one or more physical devices configured to execute instructions. For example, the logic device 1001 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 1001 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 1001 optionally may be distributed among two or more separate devices, which may be remotely located and/or configured for coordinated processing. Aspects of the logic device 1001 may be virtualized and executed by remotely accessible, networked computing devices configured in a cloud-computing configuration.

Storage device 1002 includes one or more physical devices configured to hold instructions executable by the logic device to implement the methods and processes described herein. When such methods and processes are implemented, the state of storage 1002 device may be transformed-e.g., to hold different data.

Storage device 1002 may include removable and/or built-in devices. Storage device 1002 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, nonvolatile, dynamic, static, read/write, read-only, random-access, sequential-access, location-addressable, file-addressable, and/or content-addressable devices.

In certain arrangements, the system may comprise an interface 1003 adapted to support communications between the Logic device 1001 and further system components. For example, additional system components may comprise removable and/or built-in extended storage devices. Extended storage devices may comprise one or more types of storage device including optical memory 1032 (e.g., CD, DVD, HD-DVD, Blu-Ray Disc, etc.), semiconductor memory 1033 (e.g., RAM, EPROM, EEPROM, FLASH etc.), and/or magnetic memory 1031 (e.g., hard-disk drive, floppy-disk drive, tape drive, MRAM, etc.), among others. Such extended storage device may include volatile, nonvolatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 1001 and storage device 1002 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 10 may be used to implement embodiments of the invention.

For example a program implementing the steps described with respect to figure 9 may be stored in storage device 1002 and executed by logic device 1001. The communications interface 1020 may receive the input video signal, which may be buffered in the storage device 1002. The Logic device 1001 may implement the entropy estimation, resolution selection, filtering and encoding processes as described above under the control of a suitable program, or may interface with internal or external dedicated systems adapted to perform some or all of these processes. These tasks may be shared among a number of computing devices, for example as described with reference to figure 10. The encoded video signal may then be output via the communications interface 1020 for transmission.

Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, display subsystem 1011 may be used to present a visual representation of data held by storage device. This visual representation may take the form of a graphical user interface (GUI). As the herein described methods and processes change the data held by the storage device 1002, and thus transform the state of the storage device 1002, the state of display subsystem 1011 may likewise be transformed to visually represent changes in the underlying data. Display subsystem 1011 may include one or more display devices utilizing virtually any type of technology. Such display devices may be combined with logic device and/or storage device in a shared enclosure, or such display devices may be peripheral display devices.

When included, input subsystem may comprise or interface with one or more user-input devices such as a keyboard 1012, mouse 1011, touch screen 1011, or game controller (not shown). In some embodiments, the input subsystem may comprise or interface with selected natural user input (NUI) componentry. Such componentry may be integrated or peripheral, and the transduction and/or processing of input actions may be handled on-or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 1020 may be configured to communicatively couple computing system with one or more other computing devices. For example, communication module of may communicatively couple computing device to remote service hosted for example on a remote server 1076 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 1074, or a wired or wireless local- or wide-area network. In some embodiments, the communication subsystem may allow computing system to send and/or receive messages to and/or from other devices via a network such as the Internet 1075. The communications subsystem may additionally support short range inductive communications 1021 with passive devices (NFC, RFID etc).

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A video processing system comprising:
a video quality estimator adapted to predict output video quality (VQ) by analysis of a version of an input video signal;
a resolution selector adapted to determine a desired resolution level of said input video signal for encoding based on a comparison of the output of said video quality estimator at the available transmission channel bandwidth with a predefined quality threshold, wherein a new resolution level is selected if the predicted video quality passes the threshold;
a resolution filter adapted to reduce the resolution of said video signal and output the video signal for encoding with a block based coding algorithm, said video signal being output at the resolution specified by said resolution selector.

2. The system of claim 1 wherein said video quality estimator predicts, for a given transmission channel bandwidth the output video quality by analysis of a full resolution input video signal

3. The system of claim 1 wherein said video quality estimator predicts, for a given transmission channel bandwidth the output video quality by analysis of a resized video signal output by said spatial resolution filter

4. The system of claim 3 wherein said spatial resolution filter outputs a plurality of resized video signals at different resolutions, and said video quality estimator predicts the video quality after encoding by analysis of each of the resized video signals output by said spatial resolution filter.

5. The system of claim 4 wherein each of said predefined plurality of resolutions is a standard video display resolution.

6. The system of any preceding claim wherein the video quality estimator is adapted to predict video quality on the basis of an analysis of the complexity of said version of said input video signal.

7. The system of any preceding claim wherein the video quality estimator is adapted to predict video quality on the basis of an analysis of the quantization parameter generated by a block-based encoder operating on said version of said input video signal.

8. The system of any preceding claim further comprising a video encoder adapted to encode the output of said resolution filter according to a block based encoding algorithm and a GOP manager adapted to cause said video encoder to encode the output of the resolution filter in accordance with an open GOP encoding scheme during periods in which the output of said resolution selector is static, and revert to a closed GOP encoding scheme for the first group of pictures after a change in output of said resolution selector resulting in a new signal resolution.

9. The system of any of claims 1 to 7 further comprising a video encoder adapted to encode the output of said resolution filter according to a block based encoding algorithm according to a closed GOP encoding scheme, and wherein said video encoder further comprises a GOP manager adapted to trigger the start of a new GOP, and to trigger said resolution filter to change to a different output resolution to coincide with the start of said new GOP.

10. The system of any preceding claim wherein said video quality estimator constitutes the first stage of a two pass encoder structure, and wherein the output of said video quality estimator to said resolution selector is the quantization parameter used in the first encoding pass of said incoming video signal, and wherein said resolution selector is adapted to select a higher resolution for a signal with a lower entropy, and a lower resolution for a higher entropy respectively.

11. A resolution selector adapted to determine a desired resolution level of an input video signal for encoding based on a comparison of a predicted video quality for said video signal at the available transmission channel bandwidth with a predefined quality threshold, wherein a new resolution level is selected if the predicted video quality passes the threshold, said resolution selector being further adapted to output an instruction for a resolution filter to reduce the resolution of said video signal to said desired resolution.

12. A method of processing a video signal, said method comprising the steps of predicting an output video quality on the basis of an analysis of a version of an incoming video signal, comparing the predicted output video quality with a defined video quality threshold, selecting an optimal resolution based on said threshold, and filtering said incoming video signal to said optimal resolution.

13. The method of claim 12 comprising the further step of encoding said filtered video signal in accordance with a block based video encoding algorithm.

14. The method of claim 12 or 13 wherein said version of an incoming video signal is the incoming video signal.

15. The method of claim 12 or 13 wherein said version of an incoming video signal is the filtered video signal.

16. The method of claim 15 wherein said step of filtering comprises filtering said incoming video signal to a plurality of resolutions resolution, said step of predicting the video quality of a version of an incoming video signal comprises predicting the video quality of each of said filtered signals, said step of comparing the predicted video quality with defined video quality thresholds comprises comparing each of the plurality of determined video qualities with defined video quality thresholds, and said step of encoding said filtered video signal in accordance with a block based video encoding algorithm comprises encoding the filtered video signal selected from said plurality as representing an optimal resolution with reference to said thresholds.

17. A computer program adapted to implement the steps of any of claims 12 to 16.

18. A computer readable medium incorporating the computer program of claim 17.
